Europäisches Patentamt

European Patent Office

Office européen des brevets

(11) Numéro de publication: **0 354 857**
A1

## (12) DEMANDE DE BREVET EUROPEEN

(21) Numéro de dépôt: 89420278.7

(22) Date de dépôt: 26.07.89

(51) Int. Cl.5: **B 65 D 41/62**
B 32 B 15/08

(30) Priorité: 28.07.88 FR 8810451

(43) Date de publication de la demande:
14.02.90 Bulletin 90/07

(84) Etats contractants désignés:
AT BE CH DE ES FR GB GR IT LI LU NL SE

(71) Demandeur: CEBAL
98, boulevard Victor Hugo
F-92115 Clichy (FR)

(72) Inventeur: Granger, Jacques
28, rue de Gereaux
F-33500 Libourne (FR)

(74) Mandataire: Séraphin, Léon et al
PECHINEY 28, rue de Bonnel
F-69433 Lyon Cedex 3 (FR)

(54) Procédé de fabrication de capsules de surbouchage à base de plomb et capsules obtenues.

(57) L'invention a pour objet un procédé de fabrication d'une capsule de surbouchage à base de plomb, dans lequel on prépare par laminage une bande métallique en plomb allié recouverte sur chacune de ses deux faces d'une pellicule d'étain allié, caractérisé en ce que en outre :

a) on prépare une bande en matière plastique multicouche comprenant une couche superficielle de matière plastique adhésive et au moins deux couches successives de matière plastique du groupe (polyoléfines, polyoléfines greffés, terpolymères) ;

b) on réunit les deux bandes en appliquant la face adhésive de la bande en matière plastique contre l'une des deux faces de la bande métallique, obtenant ainsi une bande complexe ;

c) on découpe dans ladite bande complexe un flan et on le transforme en une capsule revêtue intérieurement de matière plastique.

Ila aussi pour objet les capsules de surbouchage obtenues comportant intérieurement au moins 2 couches de matière plastique.

Ces capsules sont utilisées pour le surbouchage des bouteilles de vin, d'alcool ou de spiritueux. Leur revêtement intérieur évite les migrations de plomb en utilisation et permet de réduire le poids de plomb des capsules.

EP 0 354 857 A1

## Description

### PROCEDE DE FABRICATION DE CAPSULES DE SURBOUCHAGE A BASE DE PLOMB ET CAPSULES OBTENUES

L'invention concerne un procédé de fabrication de capsules à base de plomb, utilisées typiquement pour le surbouchage des bouteilles de vins bouchées avec un bouchon en liège complètement enfoncé dans le goulot ou pour le surbouchage des bouteilles d'alcool ou spiritueux bouchées avec un bouchon à tête dépassant du goulot. L'invention concerne aussi les capsules de surbouchage obtenues.

On s'est aperçu que ces capsules de surbouchage, typiquement réalisées par emboutissage-étirage ou par fluotournage à partir d'une bande d'alliage Pb + 1% Sn revêtue sur ses deux faces d'une épaisseur faible d'étain ne s'opposaient pas avec sécurité à la migration de plomb dans le vin.

On a déterminé en effet qu'il se produisait avec de telles capsules, dans le cas de bouteilles couleuses, des migrations accidentelles d'un peu de plomb dans le vin, en particulier parce que que le film d'étain de l'intérieur de la capsule présente des discontinuités microscopiques mettant à nu le plomb et que le plomb localement non revêtu est attaqué par l'acide acétique résultant de l'oxydation de l'alcool éthylique du vin. De plus, l'étain lui-même est attaqué en présence d'oxygène par les acides de fruit contenus dans le vin, ce qui aggrave le processus précédent.

La demanderesse a essayé de mettre au point une capsule de surbouchage à base de Pb permettant d'éviter de telles migrations du plomb et de coût acceptable.

### EXPOSE DE L'INVENTION

L'invention a pour premier objet un procédé de fabrication dans lequel on prépare par laminage une bande métallique ayant une âme en plomb allié de teneur en Pb supérieure à 95% recouverte sur chacune de ses deux faces d'une pellicule d'étain allié de teneur en Sn supérieure à 80%. Selon l'invention, on effectue en outre les opérations suivantes :

a) on prépare une bande en matière plastique multicouche comprenant une couche superficielle de matière plastique adhésive et au moins deux couches successives de matière plastique du groupe (polyoléfines, polyoléfines greffés, terpolymères) ;

b) on réunit les deux bandes en appliquant la face adhésive de la bande en matière plastique contre l'une des deux faces de la bande métallique, obtenant ainsi une bande complexe ;

c) on découpe dans ladite bande complexe un flan et on le transforme en une capsule revêtue intérieurement de matière plastique par emboutissage-étirage ou par fluotournage.

On a tout d'abord fait des essais d'augmentation de l'épaisseur de Sn allié présente sur chacune des faces du plomb allié, et on a constaté que même en multipliant cette épaisseur par 3 on ne supprimait pas sur la bande métallique laminée et donc sur les capsules les discontinuités ou manques microscopiques du revêtement en Sn allié laissant le plomb à nu. Les bandes métalliques laminées ont une épaisseur pouvant aller de 0,10 à 0,60 mm, et le plus souvent comprise dans le cas des capsules de surbouchage des bouteilles de vin entre 0,10 et 0,25 mm. Le placage de Sn allié, bien que de très faible épaisseur = de l'ordre de 0,8 % de l'épaisseur de l'ébauche en plomb allié sur chaque face de cette ébauche, permet d'éviter les fissurations et ruptures lors du laminage, et cela bien que le revêtement de Sn allié soit incomplet à la fin du processus. Une augmentation de l'épaisseur de Sn allié suffisante pour supprimer les manques s'est ainsi avérée inacceptable sur le plan économique.

On a ensuite préparé des bandes complexes par calandrage de portions d'une bande métallique avec des bandes en matière plastique multicouche comportant une couche adhésive en EAA et soit 1, soit 2, soit 3 couches de PE, ces bandes étant préparées par coextrusion parfois associée avec un calandrage. Les essais qui ont été faits ensuite sur les bandes complexes ont porté sur deux ensembles de problèmes importants pour les capsules de surbouchage :

1) l'aptitude des bandes à l'emboutissage-étirage sous forme de capsules, et l'aptitude de ces capsules au sertissage sur le goulot d'une bouteille ;

2) l'étanchéité du revêtement des capsules obtenues à l'utilisation, et surtout l'absence de migration du Pb dans le vin.

Comme cela sera illustré par les essais, on a observé que :

- avec une seule couche de PE de 10 μm d'épaisseur, l'aptitude à l'emboutissage-étirage est insuffisante. Cette conformation comprend des passes d'emboutissage et de réduction de diamètre (étagement du profil) successives, suivies de passes d'étirage de la jupe qui sont spécialement dures puisqu'elles entraînent un allongement de plus de 40% sur une structure déjà écrouie. Plus de 20 essais de fabrication de capsules à une couche de PE ont montré que leur revêtement intérieur se déchirait au stade de l'étirage, que l'on lubrifie ou pas la surface intérieure ou côté du poinçon ;

- avec deux couches de PE de chacune 10μm, aussi bien qu'avec 2 couches de PE comprenant une couche intermédiaire ou âme de 10 μm et une couche superficielle d'épaisseur 5μm, le comportement en emboutissage-étirage, vérifié sur plus de 20 essais dans chaque cas, a été trouvé satisfaisant dans le cas où la surface intérieure en PE restait sèche. Lorsque le lubrifiant liquide d'emboutissage-étirage était employé pour l'intérieur, les résultats étaient mauvais, de sorte qu'éviter en général une lubrification est une condition préférentielle importante. Les capsules à 2 couches de PE se sont également bien comportées aux essais de sertissage sur bouteilles, ce sertissage consistant en une application de la capsule sur le goulot en dépassant vers le bas l'épaulement de sa bague et s'accompagnant de diminutions du diamètre local de la capsule variables selon les emplacements et restant en général inférieures ou égales à 1,5 mm. On retrouve le même bon comportement avec 3 couches de PE. On suppose que ce bon comportement surprenant dès qu'on a deux couches pourrait être lié à des micro-déformations élastiques d'une couche de PE par rapport à l'autre, même lorsque ces couches sont liées par la coextrusion, ces micro-déformations ou ce jeu permettant d'accommoder les différences de déformation et de frottement des matériaux extérieur et intérieur par rapport aux outillages contigus.

Par ailleurs, les tests de porosité électrique et les tests de migration du Pb dans le vin ont montré que les capsules à revêtement intérieur comportant deux couches de PE donnent une protection bien meilleure que les capsules revêtues intérieurement d'une seule couche de PE. La migration du Pb dans les capsules à 2 couches de PE est 100 à 500 fois plus faible que dans les capsules sans revêtement intérieur, et ces capsules à 2 couches donnent en utilisation une protection efficace pour plus de 5 ans. Ici, deux couches de PE ne sont pas du tout équivalentes à une seule couche de PE d'épaisseur double et il est possible que les effets des surfaces formant barrière et les structures en vis-à-vis décalées des deux couches de PE aient un effet prédominant.

On peut remarquer que le document GB 713 634 décrit la fabrication d'un complexe comprenant une feuille mince d'Al, ou de Sn pur, ou de Sn à 3% Sb, ou encore de Pb revêtu de Sn, revêtue de polyéthylène, ainsi que l'intérêt du PE dans ce complexe comme protection contre la corrosion du métal sous-jacent par les substances corrosives emballées dans ce complexe, par exemple dans le cas de revêtements de joints de capsules de bouteilles. La connaissance de l'association Pb/Sn/PE ne permet toutefois pas d'arriver à la présente invention dans laquelle les revêtements de Sn allié ne sont pas étanches, ayant donc un rôle faible ou nul vis-à-vis de la corrosion, et dans laquelle le complexe réalisé doit supporter la conformation en capsule et empêcher ensuite durablement les migrations de plomb dans le vin, résultats qui de façon surprenante sont tous deux obtenus seulement à partir de deux couches de PE. Compte tenu des observations faites, l'invention est étendue aux matières plastiques similaires déjà citées, pouvant convenir pour les mêmes capsules ou pour des capsules de surbouchage d'autres types.

On a également observé de meilleurs résultats (absence de plis de la surface intérieure de la capsule) lorsque la couche superficielle de PE restait sèche, mais était en PE autolubrifié, cette particularité restant évidemment intéressante pour les autres polyoléfines.

La bande en matière plastique préparée initialement, comprenant une couche adhésive et deux couches de PE, a de préférence, pour la bonne conformation et l'économie ainsi que pour la qualité du revêtement obtenu, une épaisseur totale comprise entre 10 et 40µm, les épaisseurs des 3 couches pouvant varier comme suit: couche adhésive 2 à 6µm, couche suivante en PE 5 à 30 µm, et couche superficielle en PE 3 à 15 µm. Cette couche superficielle, en contact avec les mandrins d'emboutissage-étirage est de préférence en PE-BD autolubrifié.

La couche de matière adhésive de cette bande, en EAA dans les essais effectués, est dans l'une des matières du groupe formé par : les co-polymères d'alpha-oléfines et d'un acide ou anhydride insaturé, les ionomères, les polyoléfines greffés par un acide ou anhydride insaturé.

Le revêtement en matière plastique améliore la résistance mécanique de la bande complexe préparée, ce qui permet de diminuer l'épaisseur de plomb allié de 10 à 15% et ainsi de limiter la pollution en plomb lors du rejet des bouteilles vides dans les ordures ménagères.

Par mesure d'économie, et les améliorations de résistance à la corrosion par le revêtement de Sn allié étant exclues, la demanderesse a essayé de diminuer encore l'épaisseur de Sn allié, et elle a constaté avec surprise que son effet d'aide au laminage était maintenu malgré des proportions de manques, laissant le Pb allié à nu, atteignant en fin de laminage 30 à 50 % de la surface. C'est le cas d'une ébauche de Pb allié de 5 mm d'épaisseur colaminée avec sur chaque face une bande mince de Sn allié de 15 µm d'épaisseur, soit 0,3 % de l'épaisseur du plomb allié, jusqu'à 0,2 mm d'épaisseur: l'épaisseur de Sn allié calculée pour chaque face est de 0,6 m et on observe des épaisseurs discontinues de 0,9 à 1 µm avec environ 40 % de manques. On fabrique donc de préférence la bande métallique en colaminant l'ébauche en plomb allié avec sur chaque face une bande de Sn allié d'épaisseur 0,2 à 0,5% de l'épaisseur du plomb allié. On a vérifié que, et cela est également étonnant a cause de la proportion de manques, que l'adhésion de la bande en matière plastique restait bonne, en tout cas suffisante pour les opérations de conformation. On peut noter que ici, une fois la capsule conformée et sertie, cette adhésion n'est plus critique, le facteur important devenant alors pour la résistance à la corrosion l'efficacité de la protection apportée par le revêtement intérieur.

Les analyses préférentielles (% en masse) des produits métalliques transformés dans le procédé de l'invention sont les suivantes :
- Plomb allié : Sn 0,1 à 1,5 % ; Sb < 0,2 % ; impuretés < 0,2% ;
Pb : le solde.
- Etain allié : Cu + Ni + Zn > 0,2 %, avec Cu < 10 % - Ni < 3 % - Zn < 3,3 % ; impuretés < 0,2 % ;
Sn : le solde.

La bande en matière plastique est habituellement réunie à la bande métallique par calandrage à chaud. Dans cette opération, il faut éloigner le point de placage de la zone de chauffe, de sorte que la température de surface de la bande métallique, assez mauvaise conductrice thermique, soit ni trop chaude pour la matière plastique ni trop froide pour la liaison à assurer et typiquement comprise entre 80 et 130°C.

La couche barrière en matière plastique ou couche voisine peut être colorée sans inconvénient pour l'aptitude à la conformation de la bande complexe, avec par exemple un pigment à base de $TiO_2$ en teneur inférieure à 10 % en masse. Cette couche barrière, ou la bande en matière plastique la comprenant, est avantageusement irradiée avec une dose absorbée de 0,1 à 2 kgray et de préférence de 0,3 à 0,8 kgray pour améliorer la tenue au vieillissement, et par suite mieux assurer dans les longues durées (par exemple plus de 3 ans) la résistance vis-à-vis des migrations de Pb.

L'invention a pour deuxième objet la capsule de surbouchage obtenue, qui comprend par suite de son mode de conformation une jupe plus mince que son fond, par exemple épaisse de 0,14 mm tandis que le fond est d'épaisseur 0,18 mm, et comporte les couches suivantes en allant de l'extérieur vers l'intérieur, sans tenir compte de la décoration extérieure :
- un film à base de Sn, puis une couche à base de Pb, puis encore un film à base de Sn, chacun de ces deux films à base de Sn présentant sur au moins 15% de sa surface des manques visibles au grossissement 200, laissant la couche à base de Pb découverte ;
- puis un revêtement intérieur de matière plastique comprenant au contact du deuxième film à base de Sn une couche adhésive, puis au moins deux couches successives de matière plastique du groupe (polyoléfines, polyoléfines greffés, terpolymères).

Ce revêtement intérieur de matière plastique de la capsule comprend de préférence, pour l'économie et la facilité de sa fabrication, seulement deux couches de PE à la suite de la couche adhésive. De façon typique, la couche en PE en contact avec la couche adhésive a une épaisseur comprise entre 7 et 25µm, et la couche en PE superficielle a une épaisseur de 3 à 10µm et est de préférence en PE basse densité ainsi que de préférence aussi de qualité autolubrifiée, le revêtement intérieur ayant alors une surface apparente particulièrement lisse.

Les avantages du procédé et de la capsule de surbouchage de l'invention sont les suivants :
- la masse de plomb allié de la capsule est réduite, typiquement de 10 à 15 % ;
- la masse d'étain peut être également réduite ;
- les flans découpés dans la bande complexe fabriquée sont transformés en capsule avec les outillages habituels et, par exemple selon la gamme d'emboutissage-étirage ou de fluotournage habituelle, la seule particularité étant de maintenir sèche la surface en matière plastique, qui devient l'intérieur de la capsule;
- effet surprenant de la double couche de matière plastique, à la fois pour la conformation et pour la protection vis-à-vis des migrations de Pb.

## EXEMPLES ET ESSAIS

### 1er essai.

On a fabriqué une bande métallique à partir d'une bande d'âme en plomb allié à plus de 98,5 % avec une teneur en Sn de 1,2 % et Sb < 0,2 %, et de bandes minces de Sn allié à 99,4 % contenant 0,5 % de (Cu + Ni + Zn) représentant chacune 0,8 % de l'épaisseur du plomb allié au moment de leur application sur le plomb par colaminage. Le rapport de corroyage ( = épaisseur initiale/épaisseur finale) était de 26, avec une épaisseur finale de 0,18 mm.

On a aussi fabriqué une bande métallique à partir des mêmes alliages, les bandes minces en Sn allié représentant seulement 0,3 % de l'épaisseur de plomb allié, au lieu de 0,8 %. On a constaté avec surprise que le laminage à chaud, fait dans les mêmes conditions, se déroulait sans incident de criques ou ruptures.

Dans le premier cas, on constate à fort grossissement que, sur la bande laminée, les couches superficielles de Sn allié comportent des manques laissant l'âme en Pb allié non revêtu, ces manques représentant 10 à 15 % de la surface. Dans le deuxième cas, ces manques représentent environ 40 % de la surface.

### 2ème essai.

A partir de complexes fabriqués à partir de la seconde bande métallique et de 3 bandes en matière plastique comprenant toutes une couche adhésive de 5 µm d'EAA et 1 à 3 couches de PE coextrudées, on a fabriqué des capsules de dimensions : diamètre intérieur de tête 29,5 mm x hauteur 50 mm x conicité 1/20. On a fait des variantes sur la lubrification et sur la qualité de la couche superficielle de PE, et on a soumis plusieurs capsules correspondant à ces divers cas à des tests avec un porosimètre WACO (marque déposée).

Les résultats d'emboutissage-étirage sont les suivants :
- quelle que soit la lubrification, les flans à une seule couche de PE donnent des ruptures de cette couche de PE à l'étirage ;
- lorsque les deux faces des flans à 2 ou 3 couches de PE sont lubrifiées selon la technique en usage pour les flans métalliques, ces flans donnent également des ruptures à l'emboutissage-étirage ;
- lorsque seule la face métallique des flans à 2 ou 3 couches de PE est lubrifiée, l'autre face restant sèche, ces flans se comportent de façon satisfaisante à l'emboutissage-étirage ;
- les autres remarques faites lors de ces essais sont les suivantes : l'état de surface est un peu meilleur lorsque la couche superficielle de PE est en PE basse densité et en outre cette couche est de préférence en qualité autolubrifiée du commerce, l'emploi de PE-BD autolubrifié permettant d'obtenir des surfaces intérieures parfaitement lisses pour les capsules.

Dans le test de porosité électrique "WACO" (marque déposée), on fait passer un courant continu de 6,3 V entre une capsule munie de son revêtement intérieur et une électrode centrale, le milieu conducteur dont est remplie la capsule étant une solution NaCl à 20%. L'intensité (mA) qui passe est proportionnelle à la surface totale des porosités de la surface testée et les résultats obtenus se résument comme suit :
- capsules à une seule couche de PE : 5 à 150 mA
- capsules à 2 ou 3 couches de PE : moins de 1 mA

L'étanchéité est insuffisante pour "plus de 5 mA", elle est bonne ou parfaite pour "moins de 1 mA".

3ème essai.

On a fabriqué quelques centaines de capsules de hauteurs différentes, correspondant à des étirages plus ou moins importante, partir d'une bande en matière plastique de 3 couches coextrudées: EAA 5 µm + PE 10 µm + PE.BD 10 µm. La face matière plastique des flans n'était pas lubrifiée pour l'emboutissage-étirage.

1er lot : bande complexe d'épaisseur 0,20 mm - 825 capsules de ∅ intérieur de tête 29,5 mm x h 50 mm x conicité 1/20 - dont 300 soumises au test de porosité électrique.

2ème lot : bande complexe de 0,25 mm. 800 capsules de ∅i 28,5 mm x h 55 mm x 1/20 - dont 250 testées en porosité électrique.

3ème lot : même bande complexe que pour le 2ème lot - 250 capsules de ∅i 29,5 mm x h 75 mm x 1/20 - dont 100 testées en porosité électrique.

Les capsules sont toutes bonnes et les résultats des tests de porosité sont tous inférieurs à 1 mA. Ces essais montrent que la procédé donne des résultats reproductibles et qu'il reste valable même pour de grandes hauteurs de capsules (étirages plus importants).

4ème série d'essais.

Tests de migration du Pb : on met une quantité donnée de solution d'acide acétique à 2 % dans chaque capsule et on l'y laisse pendant 48h, puis on recueille l'acide et on y dose le Pb selon la méthode O.I.V. (Office International de la Vigne et du Vin).

Les résultats obtenus sur quelques capsules sans revêtement intérieur et sur des capsules à 2 couches de PE, se résument comparativement comme suit (15 à 20 capsules de chaque sorte) :
- sans revêtement intérieur: 2600 à 2900 mg de Pb/l
- 2 couches de PE : 4,16 à 9,22 mg de Pb/l.

De l'ensemble des résultats déjà connus et obtenus ici, on a pu déduire par extrapolation que :
- pour une capsule à base de Pb non revêtue intérieurement de matière plastique, au bout de 5 ans, les migrations de Pb sont comprises entre 10 et 500 µg/l, avec des pics possibles jusqu'à 2000 µg/l ;
- pour une capsule à base de Pb revêtue d'une seule couche de PE, la protection peut être efficace pendant environ 18 mois, mais ensuite on doit retrouver les migrations de Pb de la capsule non revêtue ;
- pour une capsule à base de Pb revêtue de deux couches de PE, la protection est bien meilleure que pour une capsule non revêtue intérieurement, la migration (µg/l) étant divisée par 100 à 500 jusqu'à 5 ans.

Dans l'énoncé précédent, l'expression "capsule à base de Pb" est employée pour les trois couches habituelles :
film de Sn allié / plomb allié / film de Sn allié, le film de Sn allié présentant des manques commes on l'a vu.

Les tests de migration dans l'acide acétique sont les plus significatifs, ils montrent l'amélioration spectaculaire liée aux deux couches de matière plastique, ici des couches de PE de 10 µm pour la couche barrière et de 5 ou 10µm pour la couche superficielle.

**Revendications**

1. Procédé de fabrication d'une capsule de surbouchage à base de plomb, dans lequel on prépare par laminage une bande métallique ayant une âme en plomb allié de teneur en Pb supérieure à 95 % recouverte sur chacune de ses deux faces d'une pellicule d'étain allié de teneur en Sn supérieure à 80%, caractérisé en ce que en outre :

a) on prépare une bande en matière plastique multicouche comprenant une couche superficielle de matière plastique adhésive et au moins deux couches successives de matière plastique du groupe (polyoléfines, polyoléfines greffés, terpolymères) ;

b) on réunit les deux bandes en appliquant la face adhésive de la bande en matière plastique contre l'une des deux faces de la bande métallique, obtenant ainsi une bande complexe ;

c) on découpe dans ladite bande complexe un flan et on le transforme en une capsule revêtue intérieurement de matière plastique.

2. Procédé selon la revendication 1, dans lequel on transforme le flan en capsule par emboutissage-étirage ou par fluotournage en lubrifiant sa face métallique ou face externe de la capsule et en maintenant sa face plastique ou face interne sèche.

3. Procédé selon l'une quelconque des revendications 1 ou 2, dans lequel la couche de matière plastique formant la surface intérieure de la capsule est en polyoléfine autolubrifiée.

4. Procédé selon l'une quelconque des revendications 2 ou 3, dans lequel la bande en matière plastique préparée comprend en plus de sa couche adhésive deux couches en PE, l'épaisseur totale de cette bande étant comprise entre 10 et 40 µm.

5. Procédé selon la revendication 4, dans lequel la couche de matière plastique formant la surface intérieure de la capsule est en PE.BD autolubrifié.

6. Procédé selon la revendication 4, dans lequel la couche de matière adhésive de la bande en matière plastique multicouche est dans l'une des matières du groupe formé par : les copoly mères d'alpha-oléfines et d'un acide ou anhydride insaturé ; les ionomères ; les polyoléfines greffés par un acide ou un anhydride insaturé.

7. Procédé selon l'une quelconque des revendications 1 à 5, dans lequel on obtient la bande métallique en colaminant l'ébauche en plomb allié avec sur chaque face une bande de Sn allié d'épaisseur 0,2 à 0,5 % de l'épaisseur du plomb alllié.

8. Procédé selon la revendication 7, dans lequel l'âme en plomb allié a pour composition (% en masse) : Sn 0,l à 1,5 % ; Sb < 0,2 % ; impuretés < 0,2 % ; Pb : le solde.

9. Procédé selon la revendication 8, dans lequel la bande en Sn allié a pour composition (% en masse) Cu + Ni + Zn > 0,2% avec Cu < 10 % - Ni < 3 % - Zn < 3,3 % ; impuretés 0,2 % ; Sn : le solde.

10. Procédé selon la revendication 1, dans lequel on plaque la bande en matière plastique contre la bande métallique par calandrage à chaud, le point de placage étant éloigné de la zone de chauffe et la température de surface de la bande métallique étant alors comprise entre 80 et 130°C.

11. Procédé selon la revendication 1, dans lequel la couche de matière plastique qui, dans la bande multicouche, est voisine de la couche adhésive a été irradiée à une dose de 0,1 à 2 kGy.

12. Capsule de surbouchage comprenant un fond et une jupe plus mince que ce fond , avec la structure suivante en allant de l'extérieur vers l'intérieur, sans tenir compte de la décoration extérieure ;
- un film à base de Sn, puis une couche à base de Pb, puis encore un film à base de Sn, chacun de ces films présentant sur au moins 15% de sa surface des manques visibles à fort grossissement laissant la couche à base de Pb découverte;
-puis un revêtement intérieur en matière plastique comprenant au contact du deuxième film à base de Sn une couche adhésive, puis au moins deux couches successives de matière plastique du groupe (polyoléfines, polyoléfines greffés, terpolymères).

13. Capsule selon la revendication 12, dont le revêtement intérieur en matière plastique comprend deux couches successives de PE.

14. Capsule selon la revendication 13, dont le revêtement intérieur en matière plastique comprend : une couche adhésive en EAA, puis une couche en PE d'épaisseur 7 à 25 µm, puis une couche superficielle en PE d'épaisseur 3 à 10µm.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 340 819  (CHAMPION INT. CORP.)<br>* Page 2, lignes 15-24; page 3, lignes 8-10; page 6, lignes 25-31; page 7, lignes 15-30 *<br>--- | 1 | B 65 D  41/62<br>B 32 B  15/08 |
| Y | GB-A-1 439 305  (G. HABERSTROH)<br>* En entier * | 1 | |
| A | ----- | 8 | |

DOMAINES TECHNIQUES
RECHERCHES (Int. Cl.5)

B 32 B
B 65 D  41

Le présent rapport a été établi pour toutes les revendications

| Lieu de la recherche | Date d'achèvement de la recherche | Examinateur |
|---|---|---|
| LA HAYE | 17-11-1989 | IBARROLA TORRES O.M. |